(19) Europäisches Patentamt
European Patent Office
Office européen des brevets

(11) Publication number: 0 454 240 A2

# (12) EUROPEAN PATENT APPLICATION

(21) Application number: 91200941.2

(51) Int. Cl.5: G02F 1/15, H01B 1/12

(22) Date of filing: 19.04.91

(30) Priority: 24.04.90 IT 2012790

(43) Date of publication of application:
30.10.91 Bulletin 91/44

(84) Designated Contracting States:
AT BE CH DE DK ES FR GB GR LI LU NL SE

(71) Applicant: ENIRICERCHE S.p.A.
Corso Venezia 16
I-20121 Milan(IT)

(72) Inventor: Passerini, Stefano
Via Salaria 1410
I-00138 Rome(IT)
Inventor: Scrosati, Bruno
Piazza Lancellotti 25
I-00186 Rome(IT)
Inventor: Gorenstein, Annette
Rua Maria Umbelina Couto 210
Campinas, Sao Paulo 13081(BR)
Inventor: Andrei, Maria
Via Perini 1
I-43042 Berceto, Parma(IT)
Inventor: Roggero, Arnaldo
Via Libertà 72
I-20097 San Donato Milanese, Milan(IT)

(74) Representative: Roggero, Sergio et al
Ing. Barzanò & Zanardo Milano S.p.A. Via
Borgonuovo 10
I-20121 Milano(IT)

## (54) Electrochromic window, based on a polymeric electrolyte.

(57) An electrochromic window comprises:
(a) a tungsten oxide ($WO_3$) electrode on a transparent, conductive glass sheet;
(b) a nickel oxide (NiO) counterelectrode activated by electrochemical intercalation of lithium, on a transparent, conductive glass sheet; and
(c) a solid, polymeric electrolyte interposed between said electrode (a) and said counterelectrode (b),
with the polymeric electrolyte being formed by a solid solution of an ionic lithium compound in a solid, cross linked polyether, obtained by copolymerization of a vinyl-ether with a divinyl-ether.

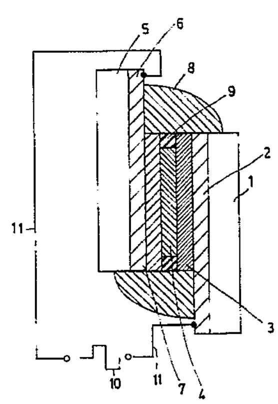


Fig.1

EP 0 454 240 A2

The present invention relates to an electrochromic window, based on a polymeric electrolyte, which electrochromic window is endowed with improved characteristics.

Optical devices which, following the application of an electric signal, are capable of turning from a condition of maximum transparency into the opposite condition, with minimal transmittance, are known in the art. These devices are considerably interesting from the viewpoint of energy saving, in the field of building industry (smart window) and in automobile industry.

In these devices, the optical modulation can be suitably induced by electrochemical way by means of the use of electrochromic materials. By ≪electrochromic materials≫, those compounds are meant which are capable of undergoing reversible changes in colour following suitable electrochemical processes. The example is typical of tungsten oxide, $WO_3$, which turns from transparent into blue coloured following an electrochemical intercalation process of the type:

$$\underset{\text{(transparent)}}{WO_3 + xM^+ + xe^-} \rightleftharpoons \underset{\text{(blue)}}{M_xWO_3}$$

carried out in a cell containing a transparent electrolyte capable of supplying the intercalating ion $M^+$ -(normally, an alcali metal ion). If the cell contains another, optically passive, material (i.e., a material which is transparent irrispective of whether the signal applied when to it is an anodic or a cathodic one is applied), or a material which is electrochromic with complementary characteristics to $WO_3$, a device is obtained which, when a signal (e.g. a cathodic signal) is applied to it, becomes of dark colour (due to the formation of blue-coloured $M_xWO_3$), whilst, when the opposite signal (i.e., an anodic signal) is applied to it, turns back into transparent (owing to the restoration of light-coloured $WO_3$). Therefore, by the application of a square-wave signal, the optical transparency of the device can be modulated, with said device being hence given the characteristics of an electrochromic window, with the important technological implications as above mentioned. For this known art, reference is made in particular to the paper by B. Scrosati in Chimicaoggi, June 1989, pages 41-45.

In the sector to which the present invention is directed, a continuous need exists, due to application reasons, of improving both the laminar configuration of the electrochromic devices in the solid state, as well as the electrochromic materials, so as to accomplish fast and reversible electrochromic processes. In particular, the present Applicant found, according to the present invention, that an electrochromic window having laminar configuration and with unexpectedly improved performance can be provided by means of the use of a particular polymeric electrolyte in the solid state inserted between a layer of tungsten oxide and a layer of nickel oxide, with said layers being deposited on a glass support made conductive by films of indium and tin oxides.

In accordance therewith, the present invention relates to an electrochromic window comprising:

(a) an electrode of tungsten oxide ($WO_3$) on a transparent, conductive glass sheet bearing on its inner face a layer of conductive material of tin oxide, or of tin and indium oxides;

(b) a counterelectrode of nickel oxide ($NiO_z$ , with z comprised within the range of from 1 to 1.66), activated by intercalation of lithium metal, on a transparent, conductive glass sheet bearing, on its inner face, a layer of a conductive material of tin oxide, or tin and indium oxides; and

(c) a solid, polymeric electrolyte interposed between said electrode (a) and said counterelectrode (b),

with said polymeric electrolyte being a solid solution of an ionic lithium compound in a solid, crosslinked polyester, obtained by copolymerization of a vinyl-ether having the formula:

$R\text{-}(O\text{-}CH_2\text{-}CH_2)_n\text{-}O\text{-}CH=CH_2$ (I)

wherein:

R represents a methyl or ethyl radical; and

n is an integer comprised within the range of from 1 to 6;

with a divinyl-ether having the formula:

$CH_2=CH\text{-}(O\text{-}CH_2\text{-}CH_2)_m\text{-}O\text{-}CH=CH_2$ (II)

wherein:

m is an integer comprised within the range of from 1 to 6;

with a molar ratio of the divinyl-ether (II) to the vinyl-ether (I) comprised within the range of from 1:100 to

10:100;
with said cross linked polyether having a weight average molecular weight of at least 10,000, and a glass transition temperature (Tg) comprised within the range of from -60 °C to -80 °C.

In the electrochromic window according to the present invention, the electrode of tungsten oxide can be prepared, according to technologies presently known in the art, by depositing, by sputtering techniques, a thin layer of tungsten oxide ($WO_3$) on a glass sheet made conductive by means of a film of tin oxide, or of tin and indium oxides. The layer of tungsten oxide will tipically have a thickness of the order of 3,000 Å. The conductor glasses are products available from the market.

Also the counterelectrode of nickel oxide can be prepared by deposition on conductive glass by means of techniques known in the art. However, in this initial layer, nickel oxide is not capable of operating as the counterlectrode in an electrochromic window. This condition requires an activation treatment, which essentially consists in a pre-intercalation of lithium. For that purpose, the electrode is charged to an electrochemical cell containing a solution of a lithium salt (e.g., lithium perchlorate) in an aprotic solvent (e.g., propylene carbonate) and a counterelectrode of lithium metal. Owing to the cathodic polarization, the intercalation of lithium inside nickel oxide is promoted. This process modifies the optical properties of said nickel oxide layer. In fact, owing to lithium entering inside its structure, nickel oxide becomes transparent and capable of reversibly donating and retaking said lithium, either without loosing its transparency, or turning into its coloured state with an electrochemical process complementary to the process of ($WO_3$).

In the electrochromic window according to the present invention, the solid polymeric electrolyte interposed between the electrode (a) and the counterlectrode (b), is constituted by a solid solution of an ionic lithium compound in a solid, crosslinked polyether.

The ionic compounds of lithium can be advantageously selected from the group consisting of lithium perchlorate, borate, fluoroborate, thiocyanate hexafluoroarsenate, trifluoroacetate and trifluoromethane-sulphonate. Lithium perchlorate is preferred.

The solid, crosslinked polyether useful for the purposes according to the present invention preferably is the product of copolymerization of a divinyl-ether (II) and a vinyl-ether (I) in which R is a methyl radical and n and m are integers comprised within the range of from 1 to 6, in a mutual molar ratio of the order of 3 : 100, with a weight average molecular weight comprised within the range of from 20,000 to 100,000.

In the solid polymeric electrolyte, the atomic ratio of oxigen in said polyether to lithium in the ionic compound may be comprised within the range of from 4 : 1 to 12 : 1, and preferably is of the order of 8 : 1.

In figure 1 of the accompanying drawing tables a typical form of practical invention is shown of the window according to the present invention. In particular, in this Figure:

- with (1) the glass support is indicated, which bears the layer (2) of tin and indium oxide, onto which a layer (3) of tungsten oxide (having a thickness of approximately 3,000 Å) was deposited by sputtering;
- with (4) the solid polymeric electrolyte is indicated, which has the shape of a film having a thickness of approximately 100 microns, constituted by a crosslinked polyether containing lithium perchlorate.

More particularly, the crosslinked polyether is the product obtained by copolymerization of the divinyl-ether having the formula

$CH_2=CH\text{-}(O\text{-}CH_2\text{-}CH_2)_2\text{-}O\text{-}CH=CH_2$

with the vinyl-ether having the formula

$CH_3\text{-}(O\text{-}CH_2\text{-}CH_2)_2\text{-}O\text{-}CH=CH_2$,

in a mutual molar ratio of 3 : 100, having a weight average molecular weight of approximately 30,000 and a glass transition temperature (Tg) of -71 °C. In this polyether, lithium perchlorate was dissolved in such an amount, as to have an atomic ratio of oxigen (contained in polyether) to lithium (contained in lithium perchlorate) of about 8 : 1;

- with (5) the glass support is indicated, which bears the layer (6) of tin and indium oxide, onto which a layer (7) of nickel oxide, activated by intercalation with lithium, was deposited, by operating in the way as described hereinabove;
- with (8) a sealant is indicated; with (9) a spacer is indicated; with (10) an external generator of square-wave voltage is indicated; and with (11) the line is indicated, which connects the generator (10) with two terminals connected with the conductor layer of the electrode and the conductor layer of the counterelectrode.

The electrochromic window of Figure 1 is piloted by a square-wave signal generally variable within the range of from -2 volts to +2 volts. During the negative impulse (cathodic $WO_3$), the window is dark

(intercalation of $WO_3$) and its transmittance is low, whilst during the following positive impulse (anodic $WO_3$), the window turns back into transparent (de-intercalation of lithium from $WO_3$), and transmittance is high. This behaviour, which can be repeated a very large number of times, is bound to the following to the electrochemical process:

$$\underset{\text{(transparent)}}{Li_{x+w}NiO_z + WO_3} \rightleftharpoons \underset{\text{(dark)}}{Li_wNiO_z + Li_xWO_3}$$

This behaviour is schematically shown in figure 2 of the accompanying drawing tables. The time interval necessary for the electrochromic processes (i.e., the cathodic and anodic processes) to take place up to completeness is of the order of hundred of seconds. This time varies with varying values of the signal which pilots the cell. In case of a square wave of from +2 volts to -2 volts, the change in transmittance between the minimum and the maximum values, and vice-versa, is obtained within a time of approximately 400 seconds.

## Claims

1. Electrochromic window comprising:
   (a) an electrode of tungsten oxide ($WO_3$) on a transparent, conductive glass sheet bearing on its inner face a layer of conductive material of tin oxide, or tin and indium oxides;
   (b) a counterelectrode of nickel oxide ($NiO_z$, with z comprised within the range of from 1 to 1.66), activated by electrochemical, intercalation of lithium metal, on a transparent, conductive glass sheet bearing, on its inner face, a layer of a conductive material of tin oxide, or of tin and indium oxides; and
   (c) a solid, polymeric electrolyte interposed between said electrode (a) and said counterelectrode (b),
   with said polymeric electrolyte being a solid solution of an ionic lithium compound in a solid, crosslinked polyether, obtained by copolymerization of a vinyl-ether having the formula:

   $R\text{-}(O\text{-}CH_2\text{-}CH_2)_n\text{-}O\text{-}CH=CH_2$ (I)

   wherein:
   R represents a methyl or ethyl radical; and
   n is an integer comprised within the range of from 1 to 6; with a divinyl-ether having the formula:

   $CH_2=CH\text{-}(O\text{-}CH_2\text{-}CH_2)_m\text{-}O\text{-}CH=CH_2$ (II)

   wherein:
   m is an integer comprised within the range of from 1 to 6;
   with a molar ratio of the divinyl-ether (II) to the vinyl-ether (I) comprised within the range of from 1:100 to 10:100;
   with said crosslinked polyether having a weight average molecular weight of at least 10,000, and a glass transition temperature (Tg) comprised within the range of from -60° C to -80° C.

2. Electrochromic window according to claim 1, characterized in that the electrode of tungsten oxide is obtained by depositing, by sputtering, a layer of about 3,000 Å of tungsten oxide on the conductor glass.

3. Electrochromic window according to claim 1, characterized in that the counterelectrode of nickel oxide is obtained by depositing nickel oxide onto the conductor glass, with a following activation treatment by electrochemical intercalation of lithium.

4. Electrochromic window according to claim 1, characterized in that the ionic compounds of lithium are selected from among lithium perchlorate, borate, fluoroborate, thiocyanate, hexafluoroarsenate, trifluoroacetate and trifluoromethane-sulphonate.

5. Electrochromic window according to claim 4, characterized in that the ionic compound of lithium is lithium perchlorate.

6. Electrochromic window according to claim 1, characterized in that the solid, cross linked polyether is the product of copolymerization of a divinyl-ether (II) and a vinyl-ether (I), in which R is the methyl radical and n and m are integers comprised within the range of from 1 to 6, with their mutual molar ratio being of the order of 3 : 100, with a weight average molecular weight comprised within the range of from 20,000 to 100,000.

7. Electrochromic window according to claim 1, characterized in that in the solid, polymeric electrolyte the atomic ratio of oxigen of polyether to lithium of the ionic compound is comprised within the range of from 4 : 1 to 12 : 1, and preferably is of the order of 8 : 1.

8. Electrochromic window according to claim 1, characterized in that it furthermore comprises a generator of square-wave voltage and lines which connect said generator with two terminals respectively connected with the conductor layers of the electrode and of the counterelectrode.

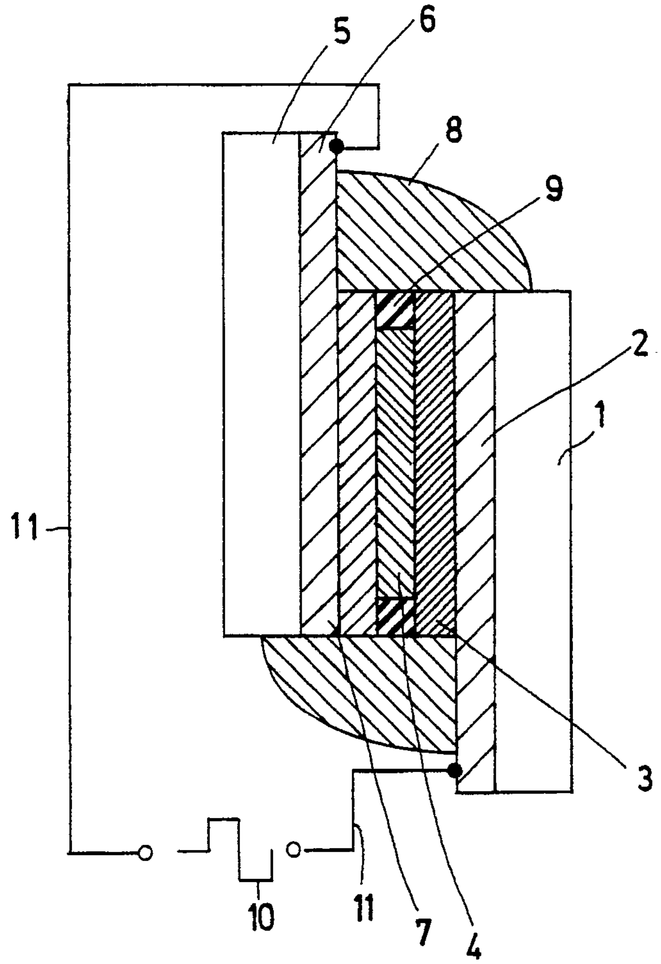


Fig.1

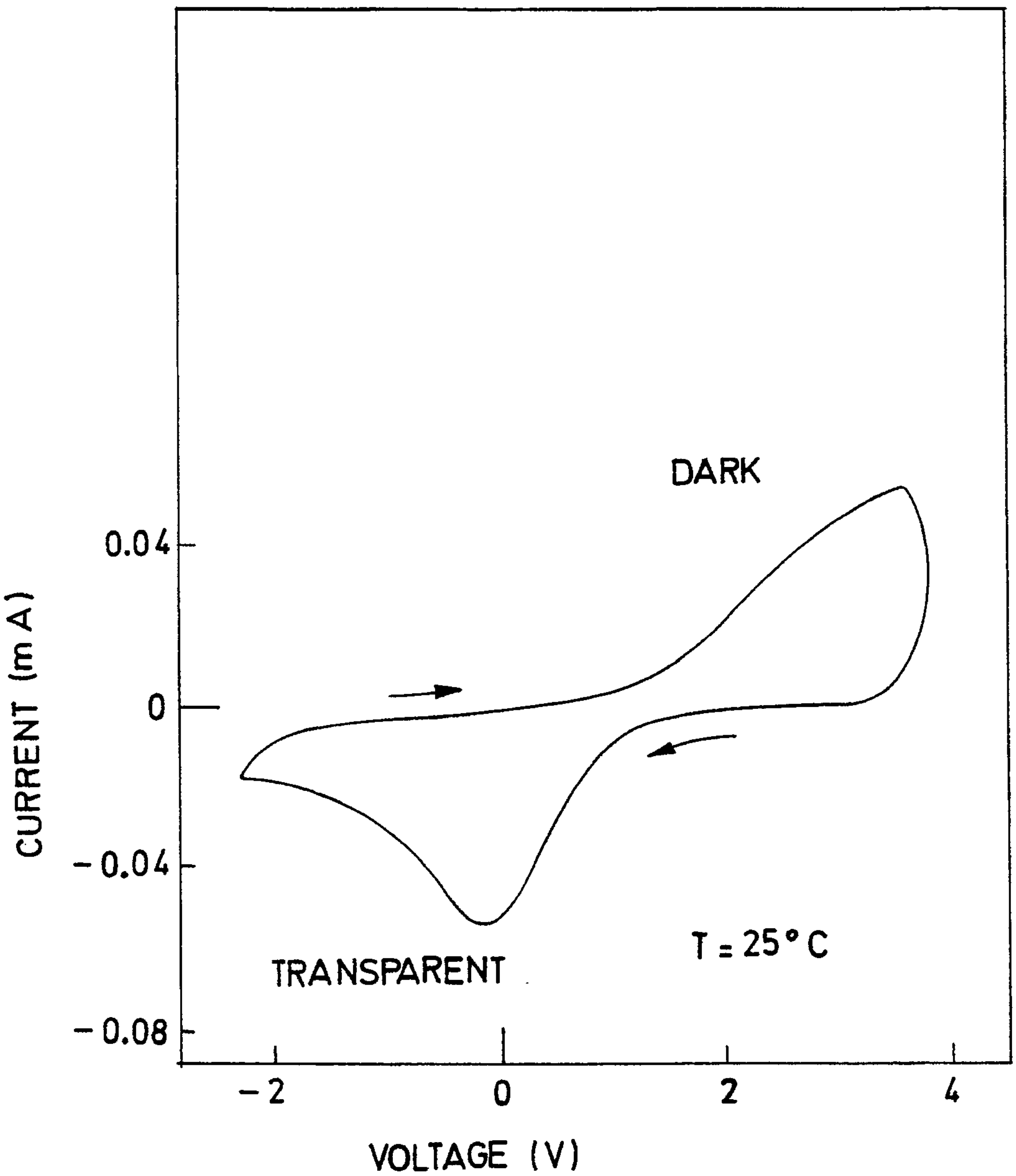
DARK
0.04
0
-0.04
-0.08
CURRENT (mA)
TRANSPARENT
T = 25° C
-2
0
2
4
VOLTAGE (V)

Fig.2